# EUROPEAN PATENT APPLICATION

(11) **EP 1 526 024 A2**
(43) Date of publication of application: **27.04.2005**
(21) Application number: 04025102.7
(22) Date of filing: 21.10.2004
(51) Int. Cl.: B60K 13/02

(54) **Secondary air supply device and motorcycle comprising same**

(30) Priority: 23.10.2003 JP 2003363385
(71) Applicant: YAMAHA HATSUDOKI KABUSHIKI KAISHA, Iwata-shi Shizuoka-ken (JP)
(72) Inventor: Inomori, Toshinori, Iwata-shi Shizuoka-ken (JP); Matsusaka, Shigeru, Iwata-shi Shizuoka-ken (JP); Watanabe, Kensuke, Iwata-shi Shizuoka-ken (JP)
(74) Representative: Grünecker, Kinkeldey, Stockmair & Schwanhäusser Anwaltssozietät

(57) **Abstract**

The invention relates to a secondary air supply device in conjunction with an engine including a cylinder body (51) and an exhaust path (54), further comprising a secondary air cleaner (6) for suctioning in secondary air, a secondary air supply path (62) connecting the secondary air cleaner (61) and the exhaust path (54), and a reed valve device (63) for opening and closing the secondary air supply path (62).

The invention aims to provide an improved secondary air supply device having a simplified structure.

Therefore, the invention provides that a valve chamber (63b) of the reed valve device (63) is formed in the cylinder body (51).

## Description

The present invention relates to a secondary air supply device in conjunction with an engine including a cylinder body and an exhaust path, further comprising a secondary air cleaner for suctioning in secondary air, a secondary air supply path connecting the secondary air cleaner and the exhaust path, and a reed valve device for opening and closing the secondary air supply path. Further, the invention relates to a motorcycle, in particular scooter type motorcycle, comprising a secondary air supply device with an engine including a cylinder body and an exhaust path, a secondary air cleaner for suctioning in secondary air, a secondary air supply path connecting the secondary air cleaner and the exhaust path, and a reed valve device for opening and closing the secondary air supply path.

A secondary air supply device provided at a motorcycle for feeding air input from a secondary air cleaner by way of a secondary air supply path to an engine exhaust path formed in the chassis and including a reed valve device installed in this secondary air supply path is shown, e.g. in JP-B Hei 1-22451. Therein, a reed valve device formed as a separate unit, is built into the cylinder body.

However, the reed device is attached to the cylinder body as a separate unit so that the reed valve device sticks out from the cylinder body, interferes with other parts, and has a restricted installation position.

It is, therefore, an object of the invention to provide an improved secondary air supply device having a simplified structure. It is a further object of the invention to provide an improved motorcycle having a better accessibility to the secondary air supply device.

For a secondary air supply device of the above kind, the object is solved in an inventive manner in that a valve chamber of the reed valve device is formed in the cylinder body.

Therefore, since a reed valve device comprises a valve chamber formed in the cylinder body, a simple structure is provided such that the reed valve device does not protrude from the cylinder body and does not interfere with other parts of the secondary air supply device.

Preferably, at least one rib is formed from a bottom of the valve chamber towards a valve chamber opening, and/or in that a valve body is positioned within the valve chamber.

Further, preferably the secondary air supply path includes a connecting secondary air supply path configured to connect the valve chamber and the exhaust path, wherein preferably the connecting secondary air supply path is formed as an integrated piece with the cylinder body, more preferably along a cylinder axis.

Furthermore, preferably the secondary air supply path includes a connecting secondary air supply path configured to connect the valve chamber and the exhaust path, and the connecting secondary air supply path is provided with an opening on a valve chamber side, and/or in that a valve stopper for the valve extends to a position covering the opening.

Still further, preferably the valve chamber is opened between an approximate width in a direction intersecting the cylinder axis, and an approximate width along the cylinder axis on a side surface of the cylinder body.

Moreover, preferably the approximate width in the direction intersecting the axis of the cylinder body is smaller than an approximate cylinder axial width, and/or in that the valve chamber is formed to be tilted with respect to the axial line of the cylinder.

Also, preferably a coolant hole is formed in a section other than an opening on the side surface of the cylinder body.

According to a preferred embodiment, the secondary air cleaner includes an air intake pipe and is formed in a space on an inner side of a cover covering an intake opening of the air intake pipe, wherein preferably the intake opening faces rearward and downward.

Besides, for a motorcycle of the above kind, the object is solved in an inventive manner in that the engine is mounted with its cylinder axis along a front-rear direction of a chassis of the motorcycle, and in that the reed valve device is installed on a lower side of an engine cylinder body. Therefore, the reed valve can be removed from below, which increases accessibility, in particular for maintenance.

According to a preferred embodiment of the motorcycle, the secondary air supply device is configured according to at least one of the claims 1 to 8.

Further preferred embodiments of the invention are subject to the respective subclaims.

In the following, the invention will be described in greater detail by means of preferred embodiments thereof with reference to the attached drawings, wherein:

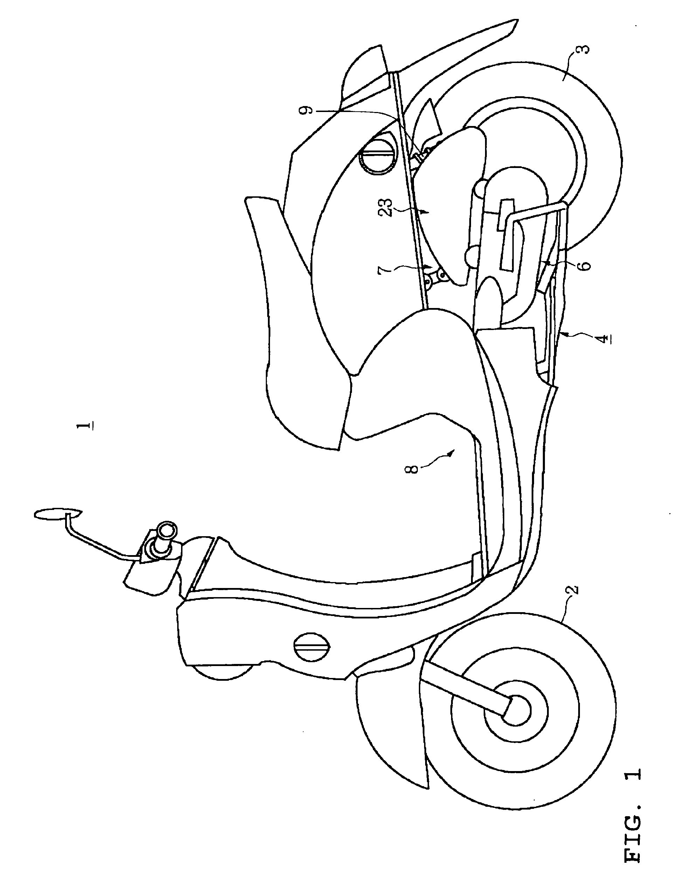

- FIG. 1: is a side view of a scooter type motorcycle;

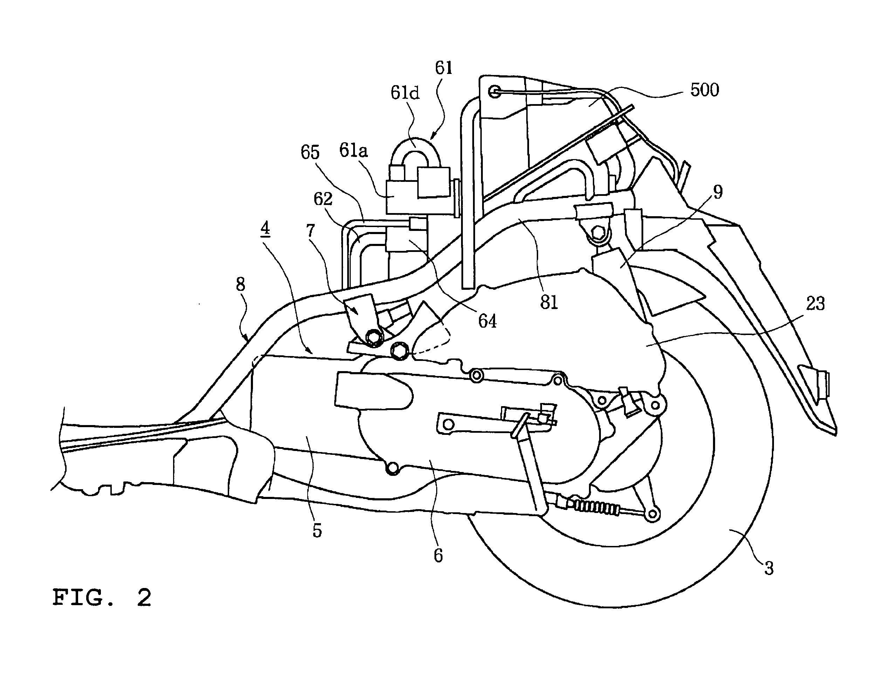

- FIG. 2: is a side view of the side of the rear wheel of the scooter type motorcycle;

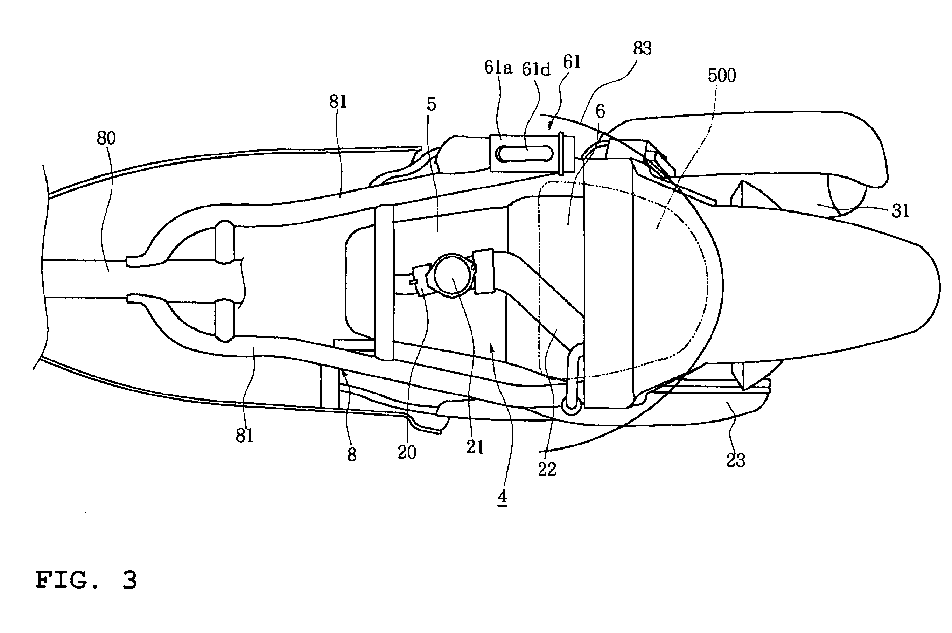

- FIG. 3: is a plan view of the side of the rear wheel of the scooter type motorcycle;
- FIG. 4: is a side view showing the engine secondary air supply device;
- FIG. 5: is a plan view showing the reed valve device and the air cleaner of the engine secondary air supply device;
- FIG. 6: is a schematic view of the engine secondary air supply device;
- FIG. 7: is a side view of the cylinder body;
- FIG. 8: is a plan view of the cylinder body;
- FIG. 9: is a cross sectional view taken along line IX - IX of FIG. 7;
- FIG. 10: is a cross sectional view taken along line X - X of FIG. 7; and
- FIG. 11: is a cross sectional view taken along line XI - XI of FIG. 7.

In these figures, the reference numeral 1 denotes the motorcycle. In this embodiment, the motorcycle is a scooter type motorcycle. The motorcycle 1 is made up of a chassis 8, a front wheel 2, and a rear wheel 3. The rear wheel 3 employs a structure for driving by a unit type swing drive unit 4. The chassis 8 includes the main frame 80 and a pair of rail frames 81 connected to the rear section of the main frame 80.

The unit swing drive unit 4 includes a four cycle, water-cooled single cylinder engine 5, and a transmission case 6 extending rearwards on the left side of the rear wheel 3 and integrated with this engine 5.

This unit swing drive unit 4 is coupled by a link mechanism 7 for free swinging movement upwards and downwards on the left-right pair of rail frames 81. The rear end of the transmission case 6 supports the rear wheel 3. A cushion unit 9 is interposed between the rear end of the transmission case 6 and the left side of the rail frame 81. The transmission case 6 is positioned on the left side of the rear wheel 3.

A power transmission device (not shown) is housed inside the transmission case 6 to convey the power of the engine 5 to the rear wheel 3. This power transmission device is constructed with a V-belt automatic transmission, a centrifugal clutch, a gear-type speed reducer, and the like.

An intake pipe 20 connects to the upper side of the engine 5. This intake pipe 20 extends rearward. A carburetor 21 connects to this intake pipe 20. An air cleaner 23 connects by way of a flexible pipe 22 to the carburetor 21. The air cleaner 23 is installed above the transmission case 6 of the unit swing drive unit 4.

An exhaust pipe 30 connects to the lower side of the engine 5. This exhaust pipe 30 extends rearward along the right side of the engine 5. A muffler 31 connects to this exhaust pipe 30. This muffler 31 is installed on the right side of the rear wheel 3.

In this embodiment of the motorcycle 1, the engine 5 is mounted along the front and rear of the cylinder axis. The engine 5 is constructed with an engine case 50, a cylinder body 51, a cylinder head 52, and a head cover 53.

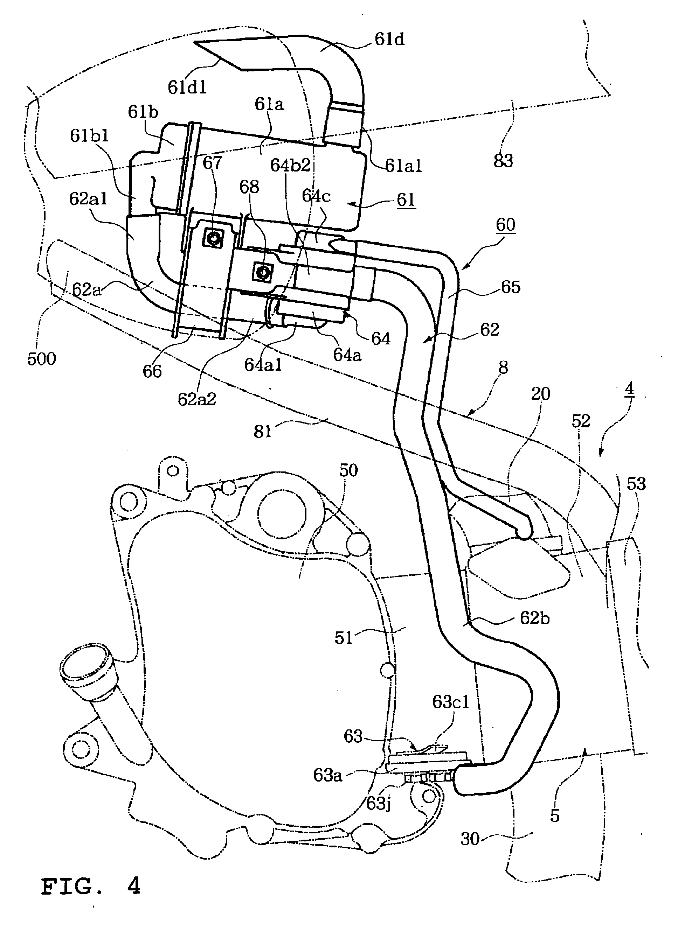

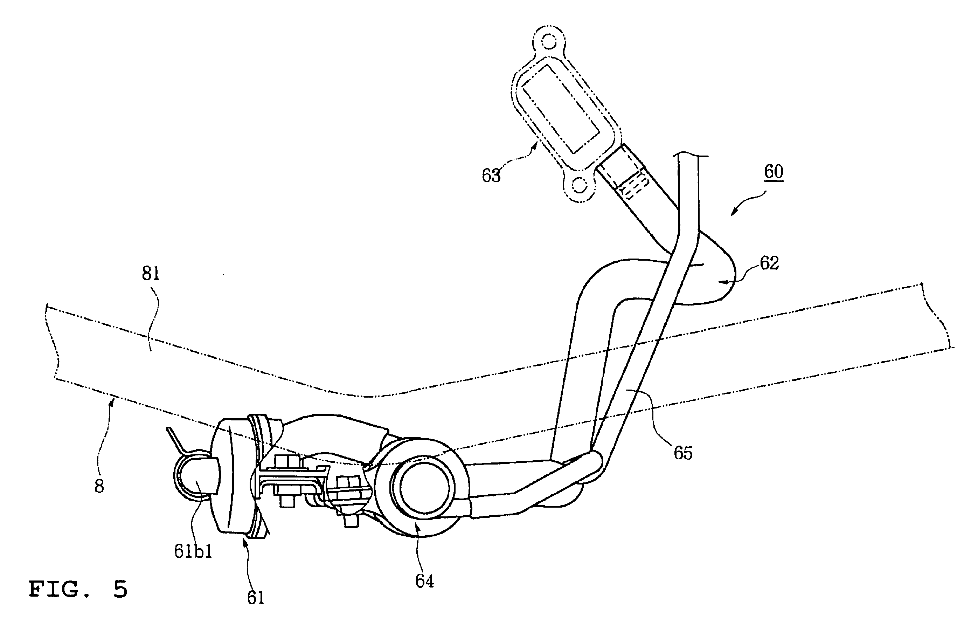

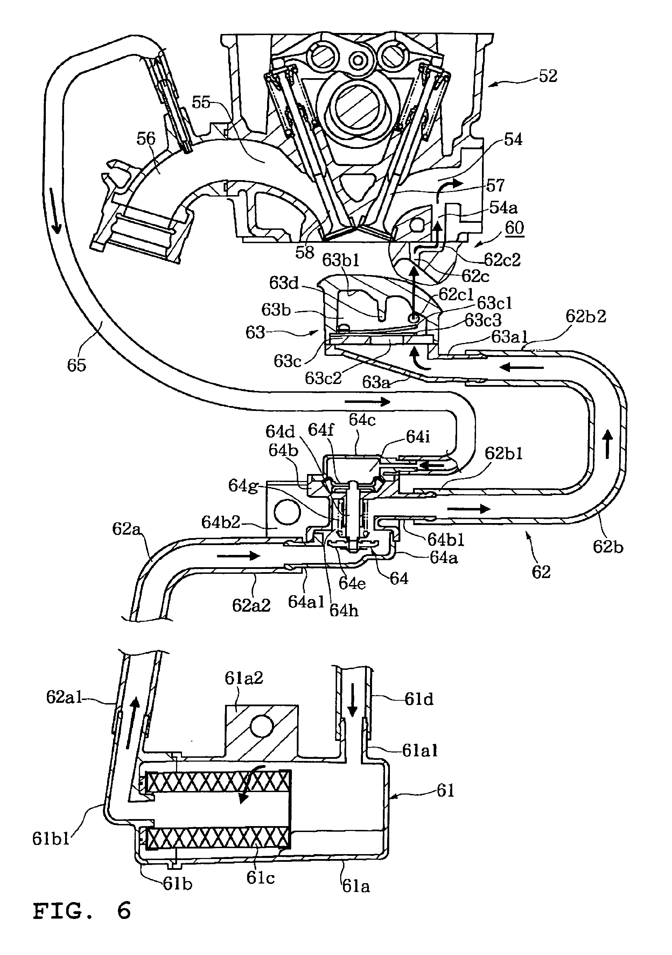

An engine secondary air supply device 60 is mounted on this motorcycle 1. This engine secondary air supply device 60 includes a secondary air cleaner 61, a secondary air supply path 62 and a reed valve device 63 as shown in FIG. 4 through FIG. 6. The engine secondary air supply device 60 supplies air suctioned from the secondary air cleaner 61 to an exhaust passage 54 of the engine 5 by way of the secondary air supply path 62. This secondary air supply path 62 includes a reed valve device 63 and an air regulator valve 64.

The engine 5 is mounted with the cylinder axis along the front and rear of the chassis 8. A reed valve device 63 is installed on the lower side of the cylinder body 51. The secondary air cleaner is mounted above the right side of the rail frame 81 configuring the chassis 8.

The secondary air cleaner has of a first case 61 a and a second case 61 b. An element 61 c is installed inside the secondary air cleaner. This secondary air cleaner includes an air intake pipe 61d. This air intake pipe 61d connects to the feed section 61a1 of the first case 61a. This air intake pipe 61d extends upward and extends rearward in a bent shape. The intake opening 61d1 is installed in the space on the inner side of the chassis cover 83. The intake opening 61d1 is also installed facing the lower part of the chassis.

In this embodiment, the secondary air cleaner is positioned upwards in a space formed on the inner side of the chassis cover 83. This chassis cover 83 is the cover that covers the intake opening 61d1 of the air intake pipe 61d. The secondary air cleaner 61 prevents foreign objects and moisture from being suctioned in and also reduces the air intake noise.

By making the intake opening 61d1 of the air intake pipe 61d face the lower part of the chassis and oriented rearwards and downwards, the air intake noise cannot easily pass into the small enclosed space formed by the large part (fuel tank 500) and the chassis cover 83. The air intake noise can therefore be reduced since resonant noise is not prone to be generated.

The secondary air supply path 62 is provided with a first flexible pipe 62a and a second flexible pipe 62b formed with a flexible member such as rubber or plastic and further a connecting secondary air path 62c. The upper flow section 62a1 of the first flexible pipe 62a is connected to the dispenser section 61 b1 of the second case 61 b. The lower flow section 62a2 is connected to the feed input section 64a1 of the valve lid 64a of the air regulator valve 64. The upper flow section 62b1 of the second flexible pipe 62b connects to the dispenser section 64b1 of the valve body 64b of the air regulator valve 64. The lower flow section 62b2 connects to the feed input section 63a1 of the valve lid 63a of the reed valve section 63.

The air regulator valve 64 is provided with a valve lid 64a assembled onto one side of the valve body 64b, and an actuator section 64c assembled onto the other side. A valve 64e is installed onto one end of the valve stem 64d. A diaphragm 64f is connected to the other end of the valve stem 64d formed in the valve body 64b. The force of a spring 64g on the valve 64e keeps the valve path 64h open.

The diaphragm 64f is supported between the actuator section 64c and the valve body 64b. A diaphragm chamber 64i partitioned by this diaphragm 64f connects to the intake pipe 56 connecting to the intake path 55 via the connecting pipe 65. An exhaust path 54 and an intake path 55 are formed in the cylinder head 52 of the engine 5. The exhaust valve 57 opens and closes the exhaust path 54. The intake valve 58 opens and closes the intake path 55. The exhaust valve 57 and the intake valve 58 are driven by the operation of the engine 5.

The intake valve 58 operation varies the pressure on the intake path 55. The pressure on the diaphragm chamber 64i connected to the connecting pipe 65 varies and operates the diaphragm 64f. This diaphragm 64f action acts by way of the valve stem 64d to make the valve 64e open and close the valve path 64h. The supply pressure of the air on the secondary air supply path 62 is adjusted in this way.

An installation piece 61 a2 is integrated on the lower side of the first case 61 a of the secondary air cleaner 61. An installation piece 64b2 is integrated with the valve body 64b on the air regulator valve 64. The installation piece 61 a2 and the installation piece 64b2 are clamped along with a clamping bracket 66 by the clamping bolts 67, 68. The air regulator valve 64 is installed at a position below the secondary air cleaner.

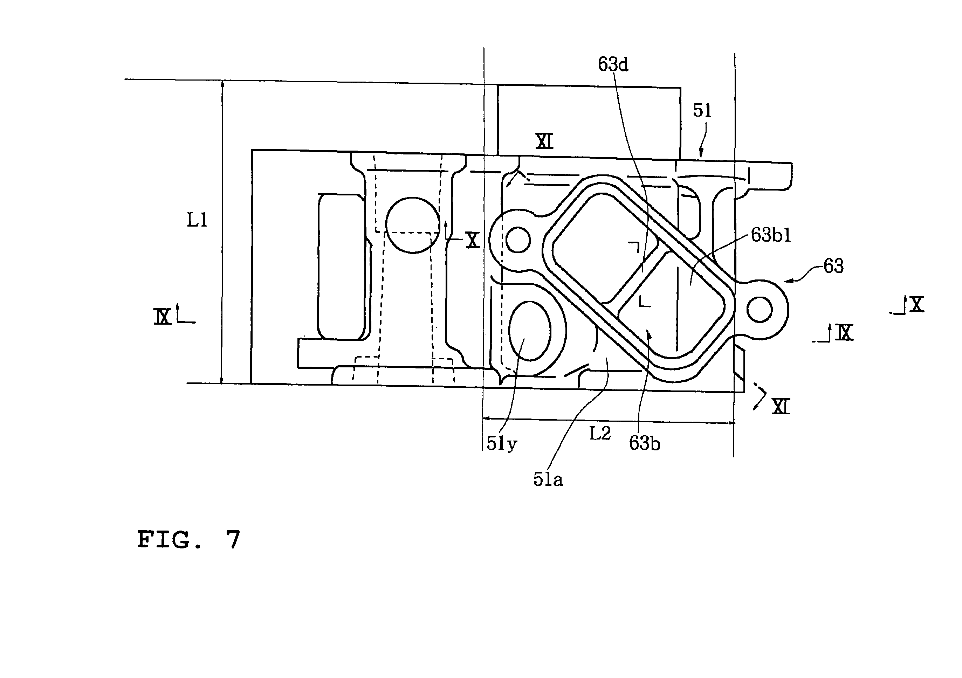

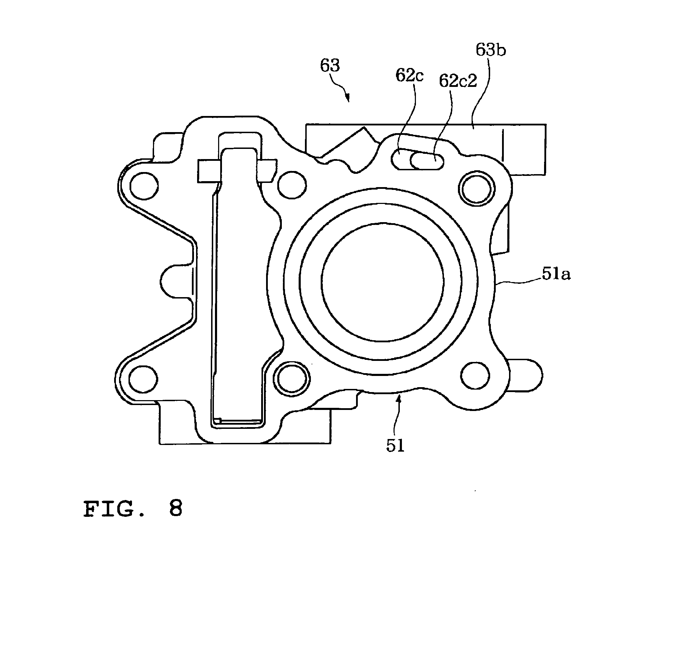

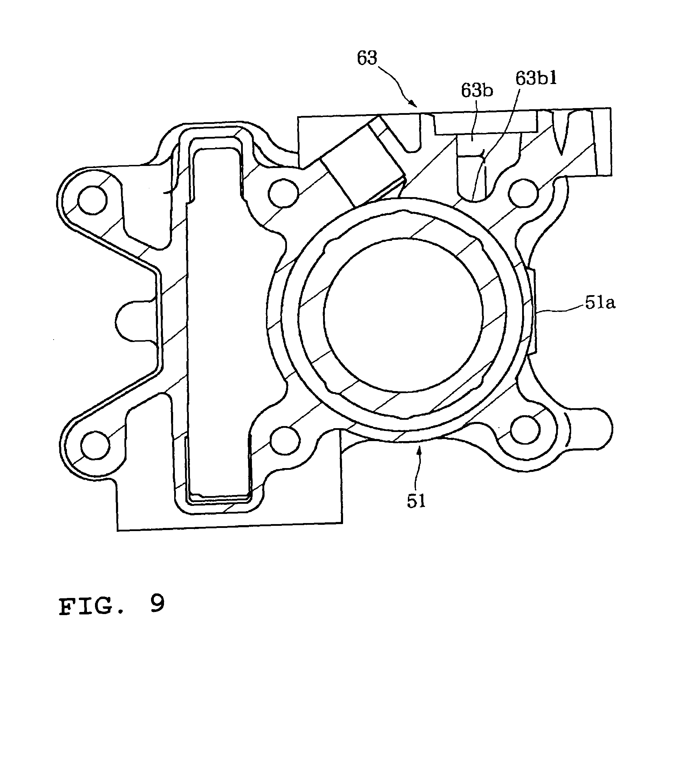

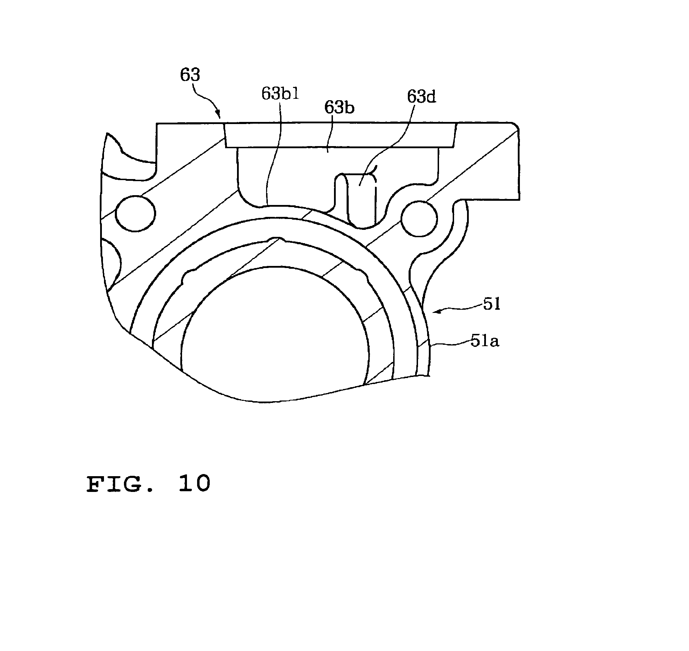

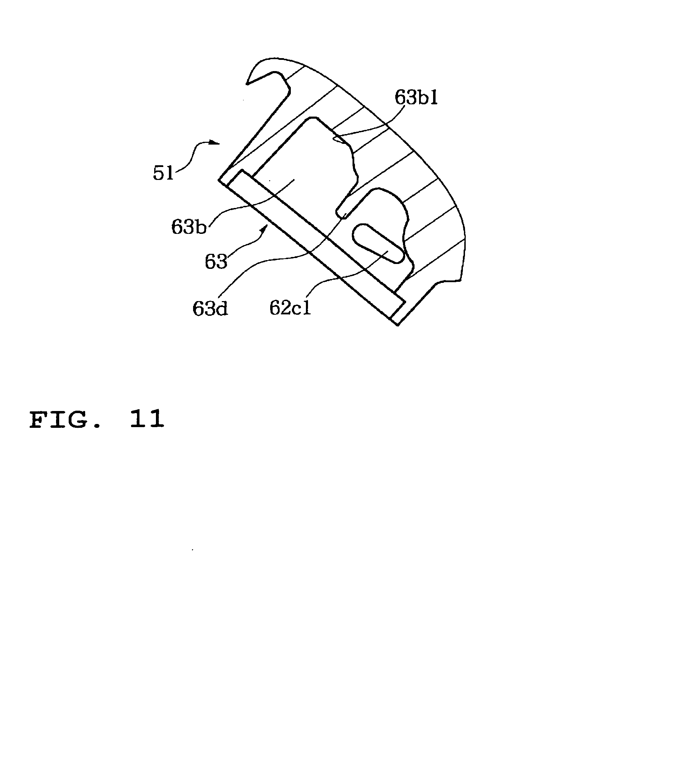

In this embodiment, the reed valve device 63 is integrated into the cylinder body 51 of the engine 5. As shown in FIG. 7 through FIG. 11, the reed valve device 63 is made up of a valve chamber 63b formed as one piece with the cylinder body 51, and a valve body 63c installed in the valve chamber 63b. A valve lid 63a clamps the valve body 63c to the valve chamber 63b. The reed valve device 63 is in this way provided with a valve chamber 63b formed in the cylinder body 51, and a valve body 63c installed in this valve chamber 63b. The reed valve device 63 is a simple structure that does not protrude from the cylinder body 51 and does not interfere with other parts.

The valve chamber 63b is formed as an integrated piece during the forming of the cylinder body 51. As shown in FIG. 7, this valve chamber 63b is formed between the approximate width L1 along the cylinder axis on the side surface of cylinder body 51, and the approximate width L2 in a direction intersecting the cylinder axis. The bottom section 63b1 of this valve chamber 63b is deeply formed to be the same position as the side wall 51a of the cylinder body 51 and is the same thickness.

By forming the valve chamber 63b between the approximate width L1 along the cylinder axis on the side surface of cylinder body 51, and the approximate width L2 in a direction intersecting the cylinder axis, the cylinder body 51 can include a reed valve device 63 utilizing the wide range of the cylinder body 51 side surface, and the cylinder body 51 can be made lighter by reducing the thickness of the valve chamber 63b.

In the cylinder body 51, the approximate width L2 in the direction intersecting the cylinder axis is made smaller than the axial width L1 along the cylinder, and by forming the valve chamber 63b tilted to the axial line of the cylinder, space can be obtained to install the reed valve device 63.

By forming a rib 63d from the bottom section of the valve chamber 63b to the valve chamber opening, the rib 63d can adjust the volume of the valve chamber 63b, and an increase in the valve body 63c impact noise due to resonance can be prevented.

The connecting secondary air path 62c connecting the valve chamber 63b and the exhaust path 54 are all integrated into the cylinder body 51. The connecting secondary air path 62c can easily be formed along the cylinder axis.

The valve chamber side opening 62c1 of the connecting secondary air path 62c is formed on the side downstream from the valve stopper 63c1 of valve chamber 63b. The valve stopper 63c1 determines the opening position of the valve 63c3 for opening and closing reed path 63c2. The exhaust path side opening 62c2 of the connecting secondary air path 62c connects to the feed input path 54a of the exhaust path 54.

The secondary air path 62c connecting the valve chamber 63b and the exhaust path 54 in this way, includes an opening 62c1 on the side of the valve chamber. By utilizing a valve stopper 63c1 of valve body 63c extending to a position covering the opening 62c1, the reverse flow of exhaust gas from the reed valve device 63 can be prevented by blocking the flow with the valve stopper 63c1, even if there is a reverse flow of exhaust gas from the opening 62c1 on the side of the valve chamber.

By utilizing a reed valve device 63 provided on the lower side of the cylinder body 51, the screw 63j of the valve lid 63a can be removed from below during maintenance of the reed valve device 63 so that maintenance can easily be performed. Further, the reed valve device 63 can be a simple structure that does not protrude from the cylinder body 51 and the reed valve device 63 will not interfere with other parts.

By mounting the engine 5 in this way in the chassis with the axis of the cylinder along the chassis front and rear, and by installing the reed valve device 63 on the lower side of the cylinder body 51 of the engine 5, the reed valve device 63 can be removed from below the engine 5.

By forming the coolant hole 51 y on sections other than the open section, on the side surface of the cylinder body 51 as shown in FIG. 7, the available space can be efficiently utilized.

The effect of the embodiment of the invention is next described. Operating the engine 5 generates an exhaust pulsed pressure within the exhaust path 54. This pulsed pressure passes through the connecting secondary air path 62c, reaches the reed valve device 63 and opens and closes the reed valve device 63. Also, with the air regulator valve 64 in an open valve state due to the engine 5 operation, a portion of the clean air within the secondary air cleaner 61 flows via the first flexible pipe 62a and the second flexible pipe 62b of secondary air supply path 62, into the reed valve device 63.

The secondary air that flowed into the reed valve device 63, then flows from the feed input path 54a into the exhaust path 54 via the connecting secondary air path 62c formed in the cylinder body 51. The secondary air input mixes with the gases in the exhaust path 54 and oxidizes the non-combusted toxic elements such as hydrocarbon and carbon monoxide within the exhaust gases in the exhaust system.

The present invention is applicable to engine secondary air supply devices for motorcycles for supplying air to the exhaust path for completely combusting the engine exhaust gases. As described above, the present invention provides a motorcycle and secondary air supply device with a simple structure capable of including a reed valve device in the secondary air supply path.

In particular, a secondary air supply device is provided having: an engine including a cylinder body and an exhaust path; a secondary air cleaner for suctioning in the secondary air; a secondary air supply path connecting the secondary air cleaner and the exhaust path; and a reed valve device for opening and closing the secondary air supply path, in which the reed valve device is provided with a valve chamber formed in the cylinder body, and a valve body formed in the valve chamber.

Therein, preferably ribs are formed from the bottom of the valve chamber towards a valve chamber opening.

More preferably, the secondary air supply path includes a connecting secondary air supply path for connecting the valve chamber and the exhaust path, and the connecting secondary air supply path is formed as an integrated piece with the cylinder body along a cylinder axis.

Further, preferably the secondary air supply path includes a connecting secondary air supply path for connecting the valve chamber and the exhaust path, and the connecting secondary air supply path is provided with an opening on a valve chamber side, and a valve stopper for the valve body extends to a position covering the opening.

Still further, preferably the valve chamber is opened between an approximate width in a direction intersecting the cylinder axis, and an approximate width along the cylinder axis on a side surface of the cylinder body.

Moreover, preferably an approximate width of the valve chamber in the direction intersecting the axis of the cylinder body is smaller than an approximate cylinder axial width, and/or the valve chamber is formed to be tilted to the axial line of the cylinder.

Therein, preferably a coolant hole is formed in a section other than an opening on the side surface of the cylinder body.

According to a further preferred aspect of the invention, a motorcycle is provided having: an engine including a cylinder body and an exhaust path; a secondary air cleaner for suctioning in the secondary air; a secondary air supply path connecting the secondary air cleaner and the exhaust path; and a reed valve device for opening and closing the secondary air supply path, in which the engine is mounted with the cylinder axis along the front and rear of the chassis, and/or the reed valve device is installed on the lower side of the engine cylinder body.

Preferably, the secondary air cleaner includes an air intake pipe, and is formed in a space on an inner side of a cover covering an intake opening of the air intake pipe.

More preferably, the intake opening faces rearward and downward.

The invention configured as described above renders the following effects.

A reed valve device is made up of a valve chamber formed in the cylinder body, and a valve body formed in that valve chamber in a simple structure which the reed valve device does not protrude from the cylinder body and does not interfere with other parts.

Moreover, ribs are formed from the bottom of the valve chamber towards the valve chamber opening, and the rib can adjust the volume of the valve chamber, and increasing resonance due to impact sounds in the valve body can be prevented.

Further, the connecting secondary air supply path connecting to the valve chamber and exhaust path is integrated with the cylinder body along the cylinder axis so that a connecting secondary air supply path can be easily formed. Furthermore, the connecting secondary air supply path connecting to the valve chamber and exhaust path includes an opening on the valve chamber side, and the valve stopper for the valve body extends to a position covering that opening, so that the extended valve stopper of the valve body can prevent a reverse flow of exhaust gas from the reed valve device by blocking the flow with the valve stopper even if there is a reverse flow of exhaust gas from the opening on the valve chamber side.

Moreover, a reed valve device is provided, by forming a valve chamber between the approximate width in a direction intersecting the cylinder axis, and the approximate width along the cylinder axis on the side surface of the cylinder body, the reed valve device can utilize the wide range of the cylinder body side surface so that the valve chamber can be made thinner and the cylinder body made lighter in weight.

Also, the approximate width in the direction intersecting the cylinder axis is smaller than the axial width of the cylinder body, and by forming the valve chamber tilted inside the cylinder chamber versus the axial line of the cylinder, sufficient space can be obtained to install the reed valve device.

Space can be effectively used by forming a coolant hole in a section other than the opening on the side surface of the cylinder body.

Because the engine is mounted with the cylinder axis along the front and rear of the chassis, and the reed valve device is installed on the lower side of the engine cylinder body, the reed valve device can be removed from below the engine.

Because the secondary air cleaner is formed in the space formed on the inner side of the cover covering the intake opening of the air intake pipe, foreign objects and moisture are prevented from being suctioned into the secondary air cleaner. The air suction noise can also be reduced to a low level.

Also, forming the intake opening to face rearward and downward, makes the generation of resonant noise difficult since the air intake (suction) noise cannot easily pass into the small enclosed space formed by the large part (fuel tank) and the chassis cover.

As described before, in order to provide a reed valve device with a simple structure in the secondary air supply path, a motorcycle 1 is provided including: an engine 5 including a cylinder body 51 and exhaust path 54; a secondary air cleaner 61 for suctioning in the secondary air; a secondary air supply path 62 for connecting the secondary air cleaner 61 and the exhaust path 54; and a reed valve device 63 for opening and closing the secondary air supply path 62, in which the reed valve device 63 includes a valve chamber 63b formed on the cylinder body 51, and a valve body 63c installed in this valve chamber 63b.

## Claims

1. Secondary air supply device in conjunction with an engine including a cylinder body (51) and an exhaust path (54), further comprising a secondary air cleaner (61) for suctioning in secondary air, a secondary air supply path (62) connecting the secondary air cleaner (61) and the exhaust path (54), and a reed valve device (63) for opening and closing the secondary air supply path (62) **characterized in that** a valve chamber (63b) of the reed valve device (63) is formed in the cylinder body (51).

2. Secondary air supply device according to claim 1, **characterized in that** at least one rib (63d) is formed from a bottom (63b1) of the valve chamber (63b) towards a valve chamber opening, and/or **in that** a valve body (63c) is positioned within the valve chamber (63b).

3. Secondary air supply device according to claim 1 or 2, **characterized in that** the secondary air supply path (62) includes a connecting secondary air supply path (62c) configured to connect the valve chamber (63b) and the exhaust path (54), wherein preferably the connecting secondary air supply path is formed as an integrated piece with the cylinder body (51), more preferably along a cylinder axis.

4. Secondary air supply device according to at least one of the claims 1 to 3, **characterized in that** the secondary air supply path (62) includes a connecting secondary air supply path (62c) configured to connect the valve chamber (63b) and the exhaust path (54), and the connecting secondary air supply path (62c) is provided with an opening (62c1) on a valve chamber side, and/or **in that** a valve stopper (63c1) for the valve (63c3) extends to a position covering the opening (62c1).

5. Secondary air supply device according to at least one of the claims 1 to 4, **characterized in that** the valve chamber (63b) is opened between an approximate width (L2) in a direction intersecting the cylinder axis, and an approximate width (L1) along the cylinder axis on a side surface (51 a) of the cylinder body (51).

6. Secondary air supply device according to claim 5, **characterized in that** the approximate width (L2) in the direction intersecting the axis of the cylinder body (51) is smaller than an approximate cylinder axial width (L1), and/or **in that** the valve chamber (63b) is formed to be tilted with respect to the axial line of the cylinder.

7. Secondary air supply device according to claim 6, **characterized in that** a coolant hole (51 y) is formed in a section other than an opening on the side surface (51 a) of the cylinder body (51).

8. Secondary air supply device according to at least one of the claims 1 to 7, **characterized in that** the secondary air cleaner (61) includes an air intake pipe (61 d) and is formed in a space on an inner side of a cover (83) covering an intake opening (61d1) of the air intake pipe (61 d), wherein preferably the intake opening (61d1) faces rearward and downward.

9. Motorcycle, in particular scooter type motorcycle, comprising a secondary air supply device (60) with an engine (5) including a cylinder body (51) and an exhaust path (54), a secondary air cleaner (61) for suctioning in secondary air, a secondary air supply path (62) connecting the secondary air cleaner (61) and the exhaust path (54), and a reed valve device (63) for opening and closing the secondary air supply path (62), **characterized in that** the engine (5) is mounted with its cylinder axis along a front-rear direction of a chassis (8) of the motorcycle (1), and **in that** the reed valve device (63) is installed on a lower side of an engine cylinder body (51).

10. Motorcycle according to claim 9, **characterized in that** the secondary air supply device (60) is configured according to at least one of the claims 1 to 8.
